# EUROPÄISCHE PATENTANMELDUNG

(11) **EP 3 499 481 A1**
(43) Veröffentlichungstag der Anmeldung: **19.06.2019**
(21) Anmeldenummer: 18211120.3
(22) Anmeldetag: 07.12.2018
(51) Int. Cl.: G08G 1/0962, G08G 1/0967, G06K 9/00

(54) **VERFAHREN UND FAHRZEUGASSISTENZSYSTEM ZUR ZUORDNUNG WENIGSTENS EINES SIGNALGEBERS ZU WENIGSTENS EINER FAHRRICHTUNG**

(30) Priorität: 14.12.2017 DE 102017222704
(71) Anmelder: Bayerische Motoren Werke Aktiengesellschaft, 80809 München (DE)
(72) Erfinder: Herchet, Frank, 85375 Mintraching (Neufahrn b. Freising) (DE)

(57) **Zusammenfassung**

Es wird ein Verfahren und ein Fahrerassistenzsystem zur Zuordnung wenigstens eines Signalgebers zu wenigstens einer Fahrrichtung bereitgestellt, wobei Umfelddaten eines Fahrzeugs mittels eines Sensors erfasst werden, wobei die Umfelddaten den Zustand eines Signalgebers und wenigstens einer separaten Anzeige betreffen und die Anzeige wenigstens eine zulässige Fahrrichtung anzeigt und die Umfelddaten hinsichtlich der wenigstens einen zulässigen Fahrrichtung ausgewertet werden, und wobei der Signalgeber mit der wenigstens einen zulässigen Fahrrichtung assoziiert wird, der die geringste Distanz zu der Anzeige aufweist.

## Beschreibung

Die Erfindung betrifft ein Verfahren und Fahrzeugassistenzsystem zur Zuordnung wenigstens eines Signalgebers zu wenigstens einer Fahrrichtung. Signalgeber können in Signalgebergruppen gruppiert werden, die im Folgenden auch als Signalgruppen bezeichnet werden. Eine Signalgruppe umfasst somit wenigstens einen Signalgeber einer Signalanlage, Lichtzeichenanlage oder Lichtsignalanlage, beispielsweise Ampeln einer Ampelanlage. Die Signalgeber einer Signalgruppe sind in gleicher Phase geschaltet. Signalgeber weisen normalerweise zwei oder drei aktivierbare optische Elemente auf, insbesondere selektiv aktivierbare Lichtquellen, die insbesondere gemäß einer vorbestimmten Signal- oder Farbfolge aktiviert oder deaktiviert werden. Signalgeber einer Signalgruppe zeigen zu einem Zeitpunkt ein gleiches Aktivierungsmuster (im Folgenden auch Signalmuster); bei ihnen sind also die sich entsprechenden optischen Elemente aktiviert/deaktiviert. Signalgeber einer Signalgruppe zeigen vorzugsweise zur gleichen Zeit gleiche Signalfarben (z.B. Grün, Gelb und/oder Rot) bzw. aktive/inaktive optische Elemente an entsprechend gleicher Position. Die Signalgeber regeln z.B. die Einfahrt eines Fahrzeugs in eine Kreuzung, aus der wenigstens durch zwei Ausfahrten in zwei Richtungen ausgefahren werden kann.

Es ist bekannt, dass Fahrzeuge mit optischen Sensoren ausgestattet sein können, die z.B. für die Verkehrszeichenerkennung eingesetzt werden. Zwar ist es prinzipiell möglich, Signalgeber zu erkennen. Jedoch lässt sich besonders dann, wenn eine separate Zufahrtsregelung für zwei oder mehr Zufahrtsspuren für eine Kreuzung erfolgt, nicht immer zweifelsfrei bestimmen, welcher Signalgeber welcher Fahrrichtung zugeordnet ist.

Dies ist besonders dann der Fall, wenn mehr als zwei Signalgeber die Einfahrt in die Kreuzung (aus Sicht des Fahrzeugs) regeln und die Signalgeber in unterschiedlicher Phase geschaltet sind, also verschiedenen Signalgruppen angehören. Beispielsweise kann ein Signalgeber einer ersten Signalgruppe am rechten und ein Signalgeber einer zweiten Signalgruppe am linken Fahrbannrand jeweils eine Fahrt auf einer ersten und einer im Wesentlichen parallel dazu verlaufenden zweiten Fahrspur regeln, wobei eine Fahrspur für eine oder mehr zulässige Fahrrichtung vorgesehen sein kann. Signalgeber einer Signalgruppe können hierbei auch über den Fahrspuren angeordnet sein. Für eine Fahrzeugsensorik kann insbesondere aus größerer Entfernung nicht klar erkennbar sein, welcher Fahrrichtung und auch welcher Fahrspur welcher Signalgeber bzw. Signalgruppe zugeordnet ist.

Weiter ist bekannt, dass Ausfahrtrichtungen aus der Kreuzung bspw. durch Symbole auf der Fahrspur (richtungsweisende Pfeile auf dem Asphalt) bzw. auf optischen Elementen der Signalgeber anzeigen können, welcher Signalgeber bzw. welche Signalgruppe welcher Fahrspur zugeordnet ist. Ein Problem ergibt sich, wenn die auf der Fahrspur angebrachten richtungsweisenden Symbole verdeckt sind oder die auf optischen Elementen der Signalgeber angebrachten richtungsweisenden Symbole (z.B. Pfeile) nicht erkannt werden können. Ein sicheres Einfahren oder automatisiertes komfortables Abbremsen des Fahrzeugs kann dann nicht zuverlässig erfolgen.

Es ist daher Ziel der Erfindung, ein möglichst frühes und zuverlässiges Erkennen einer Zuordnung von Signalgeber zu Fahrspur zu erreichen.

Es wird daher ein Verfahren und ein System gemäß der unabhängigen Ansprüche bereitgestellt. Weitebildungen der Erfindung sind Gegenstand der abhängigen Ansprüche.

In einem ersten Aspekt wird ein Verfahren zur Zuordnung wenigstens eines Signalgebers zu wenigstens einer Fahrrichtung bereitgestellt, wobei Umfelddaten eines Fahrzeugs mittels eines Sensors erfasst werden, wobei die Umfelddaten den Zustand eines Signalgebers und wenigstens einer separaten Anzeige betreffen und die Anzeige wenigstens eine zulässige Fahrrichtung anzeigt und die Umfelddaten hinsichtlich der wenigstens einen zulässigen Fahrrichtung ausgewertet werden, und wobei der Signalgeber mit der wenigstens einen zulässigen Fahrrichtung assoziiert wird, der die geringste Distanz zu der Anzeige aufweist. Der Wenigstens eine Signalgeber gehört dabei einer Signalgruppe an, wobei insbesondere wenigstens ein weiterer Signalgeber einer anderen Signalgruppe in den Umfalddaten erfasst ist.

Bei mehreren Signalgebern können die Umfelddaten hinsichtlich des Zustands der mehreren Signalgeber ausgewertet werden. Die die Signalgeber können abhängig von dem Zustand in Signalgruppen gruppiert werden. Ein Signalgeber bzw. eine Signalgruppe der Signalgruppen kann bei mehreren Anzeigen jeweils mit der Anzeige assoziiert werden, die den Signalgeber mit der geringsten Distanz zu der jeweiligen Anzeige (AN1/AN2) aufweist. Die Signalgruppe kann mit der wenigstens einen zulässigen Fahrrichtung assoziiert werden, die durch die assoziierte Anzeige angezeigt wird.

Die wenigstens eine Anzeige kann ein Verkehrsschild oder eine elektronische Anzeigeeinheit sein.

Die Signalgeber einer Signalgruppe können in einer Phase geschaltet sein. Die Signalgeber einer Signalgruppe können den gleichen Zustand, insbesondere zu einem Zeitpunkt die gleiche Signalfarbe anzeigen. Jeder Signalgeber einer Signalgruppe zeigt als vorzugsweise das gleiche Signalmuster.

Eine Steuereinheit kann abhängig von dem Zustand der Signalgeber ein Signal ausgeben, vorzugsweise dann, wenn der Zustand der Signalgeber keine Fahrt in eine gewählte oder vorbestimmte Richtung erlaubt. Die gewählte oder vorbestimmte Richtung kann auf Basis einer gewählte Fahrspur- und/oder einer Routeninformation bestimmt werden. Die Routeninformation und/oder die gewählte Fahrspur kann durch Abfrage eines Navigationssystems oder eines entfernten Rechnersystems durch die Steuereinheit bestimmt werden. Insbesondere kann die Steuereinheit Geoinformationen abrufen. Die Steuereinheit kann Teil eines Navigationssystems des Fahrzeugs sein und auf die Navigationsdaten, Geoinformation, Fahrspur- und/oder Routeninformation zugreifen.

Die Steuereinheit kann durch Ausgabe des Signals einen Fahrparameter des Fahrzeugs verändern, insbesondere eine Geschwindigkeit, Beschleunigung, Verzögerung, Querbeschleunigung, Stellung des Fahrpedals, Betätigungsgeschwindigkeit des Fahrpedals, Stellung des Bremspedals, Lenkeinschlag und/oder eine Blinkerbetätigung.

Die Steuereinheit kann ein Symbol auf der wenigstens einen Anzeige für die wenigstens eine Fahrrichtung auswerten und insbesondre dahingehend, ob eine Geradeausfahrrichtung von dem Symbol umfasst ist.

Der wenigstens eine Sensor kann ein optischer Sensor sein, insbesondere eine Kamera. Der Zustand der Signalgeber kann durch eine Farbanalyse bezüglich der emittierten Signalfarben und/oder durch eine Analyse der Position aktiver optischer Elemente der Signalgeber erfolgen.

Die Steuereinheit kann die Routen- und/oder die Fahrspurkonfiguration aus einem Speicher des Fahrzeugs, insbesondere einem Navigationsdatenspeicher oder mittels drahtloser Kommunikation von einem entfernten Rechnersystem abrufen.

In einem zweiten Aspekt wird ein Fahrzeugassistenzsystem zur Zuordnung wenigstens eines Signalgebers zu wenigstens einer Fahrrichtung bereitgestellt, wobei wenigstens ein Sensor des Fahrzeugassistenzsystems dazu eingerichtet ist, Umfelddaten des Fahrzeugs zu erfassen, wobei die Umfelddaten den Zustand eines Signalgebers und einer separaten Anzeige betreffen und die Anzeige wenigstens eine zulässige Fahrrichtung anzeigt, wobei das Fahrzeugassistenzsystem eine Steuereinheit aufweist, die die Umfelddaten hinsichtlich der wenigstens einen zulässigen Fahrrichtung auswertet und den Signalgeber mit der wenigstens einen zulässigen Fahrrichtung assoziiert, der die geringste Distanz zu der Anzeige aufweist.

Die Erfindung wird nunmehr auch mit Bezug auf die Figuren beschrieben:
- Fig. 1: illustriert schematisch ein Fahrzeug mit einem Fahrassistenzsystem gemäß der Erfindung;
- Fig. 2: veranschaulicht exemplarisch Umfelddaten eines Fahrzeugs;
- Fig. 3: veranschaulicht eine exemplarische Fahrsituation, aus der sich die Umfelddaten aus Fig. 2 ergeben können.
- Fig. 4: veranschaulicht das erfindungsgemäße Verfahren.

Ausgangspunkt der Erfindung ist, dass sich ein Fahrzeug einer Kreuzung auf einer Fahrbahn nähert. Das Verfahren wird aus Sicht des Fahrzeugs beschrieben. Die Richtung, auf der sich das Fahrzeug der Kreuzung nähert, wird im Folgenden als Einfahrtrichtung bezeichnet; die Fahrbahn umfasst also wenigstens eine Fahrspur zur Einfahrt in die Kreuzung. Aus Sicht des Fahrzeugs befindet es sich also auf einer Einfahrt zu der Kreuzung. Das Fahrzeug kann wenigstens zwei verschiedene Ausfahrten nach einer Durchfahrt durch die Kreuzung wählen. Die Fahrrichtungen ergeben sich durch eine Anordnung der Ausfahrten der Kreuzung.

Interessant ist nun der Fall, in dem an der Kreuzung mehr als eine Fahrspur zur Einfahrt in die Kreuzung bereitsteht. Durch die Wahl einer der Fahrspuren wird eine Auswahl dahingehend getroffen, welche Ausfahrt gewählt werden soll. Eine Fahrspur kann dabei für eine Fahrt in Richtung einer oder mehr Ausfahrten vorgesehen sein. Ist an der Kreuzung eine Signalanlage installiert, so ist für gewöhnlich wenigstens ein Signalgeber für jede Fahrspur der Einfahrt in die Kreuzung vorgesehen. Damit ist ein Signalgeber für die Regelung wenigstens einer Fahrrichtung der möglichen Fahrrichtungen vorgesehen. Werden allerdings mehr Signalgruppen als Fahrspuren (also Kreuzungsein- und/oder Kreuzungsausfahrten) eingesetzt, um die Einfahrt in die Kreuzung zu regeln, so ist es, insbesondere wenn die Signalgruppen über den Fahrspuren angeordnet sind, für das Fahrzeug unter Umständen schwer zu erkennen, welcher Signalgeber zu welcher Fahrrichtung gehört. Ist also die Anzahl der Signalgruppen (mit jeweils wenigstens einem Signalgeber) größer als eins und ist die Anzahl der Fahrspuren größer als die Anzahl der Signalgruppen, kann keine eindeutige Zuordnung stattfinden.

Das Fahrzeug weist nun insbesondere wenigstens einen Sensor auf, der ein Umfeld des Fahrzeugs aufnimmt und Umfelddaten erzeugt. Insbesondere handelt es sich bei dem wenigstens einen Sensor um wenigstens einen optischen Sensor, der Bilder der Umgebung bzw. des Umfelds des Fahrzeugs liefert und insbesondere eines Bereiches vor dem Fahrzeug in Fahrrichtung. Der wenigstens eine Sensor, der auch Teil eines Sensorsystems sein kann, ist dabei vorzugsweise eine Kamera. Die von dem wenigstens einen Sensor ausgegebenen Signale sind z.B. Bilddaten. Insbesondere handelt es sich bei den Bilddaten um Signale, aus denen Bilder generiert werden können. Diese Bilder weisen vorzugsweise Farbinformationen auf, und erlauben insbesondere die Auswertung von aktiven Signalfarben der Signalgeber. So kann ausgewertet werden, welcher Signalgeber welche Signalfarbe zeigt (z.B. Rot, Gelb, Grün). Es kann jedoch auch die Position der aktiven optischen Elemente, z.B. der aktiven Lichtquellen, ausgewertet werden, die z.B. auch in Bilddaten mit lediglich Graustufeninformationen heller dargestellt sind als inaktive optische Elemente. Auf Basis des von den Sensoren ausgegebenen Signals kann wenigstens bestimmt werden, welche Signalfarbe durch einen Signalgeber angezeigt wird, also in welchem Zustand sich der Signalgeber befindet.

Es werden dann Signalgruppen gebildet, wobei Signalgeber, die das gleiche Signalmuster zeigen, also in einer Phase geschaltet sind, einer Signalgruppe zugeordnet werden. Es erfolgt zur Bestimmung der Signalgruppen also eine Aufteilung der Signalgeber anhand der aktiven optischen Elemente (auf Basis einer erkannten Farbe oder auf Basis einer erkannten Position).

Zwar ist es bekannt, dass auf den optischen Elementen von Signalgebern richtungsweisende Symbole angebracht sein können. Diese können jedoch typischerweise erst in einem geringen Abstand von ca. 20-30m durch den wenigstens einen Sensor des Fahrzeugs erkannt werden. Wichtig ist aber besonders früh festzustellen zu können, ob ein Signalgeber die Fahrt zu einer Ausfahrt der Kreuzung bzw. in eine bestimmte Richtung verwehrt, also für gewöhnlich ein rotes Signal anzeigt (Ampel steht auf Rot für die entsprechende Richtung), also typischerweise in einem Bereich von mehr als 30m. Wird nun erkannt, dass ein Signalgeber eine von dem Fahrzeug gewählte Fahrrichtung sperrt, so ist ein geringerer Abstand für sicheres Bremsverhalten oft zu gering. Insbesondere ist dies dann der Fall, wenn vor der Signalanlage noch weitere Fahrzeuge auf der gewählten Fahrspur sind.

Die wenigstens eine Anzeige ist ein Richtungsanzeiger und zeigt eine zulässige oder vorgeschriebene Fahrrichtung durch richtungsanzeigende Symbole an z.B. als Schild. Die wenigstens eine Anzeige ist im Wesentlichen senkrecht zur Fahrbahn ausgerichtet. Der Richtungsanzeiger ist wesentlich größer als die auf den optischen Elementen angebrachten Symbole und kann somit früher erkannt werden.

Wichtig ist es, zu erkennen, welcher Signalgeber für die Regelung welcher Fahrrichtung zuständig ist. Das Fahrzeug bzw. der wenigstens eine Sensor kann lediglich einen Zustand oder Zustandswechsel der Signalgeber erkennen. Eine Aussage darüber, welcher Signalgeber welcher Fahrrichtung zugeordnet ist, kann aber oft nicht gemacht werden. Die Steuereinheit kann bestimmen, in welche Fahrrichtung das Fahrzeug fahren soll, insbesondere wenn eine Routeninformation z.B. für ein autonomes Fahrzeug vorliegt. Die Steuereinheit kann auch ermitteln, auf welcher Fahrspur sich das Fahrzeug befindet. Dies kann die Steuereinheit durch eine Abfrage von Positionsdaten und/oder geographischen Informationen (z.B. auf Basis von Daten aus einem Navigationsgerät) ermitteln. In den Daten kann auch hinterlegt sein, für welche Richtung/Richtungen die Fahrspur vorgesehen ist. Jedoch ist es nicht möglich, zu bestimmen, welcher Signalgeber für die Fahrrichtung oder Fahrspur gilt.

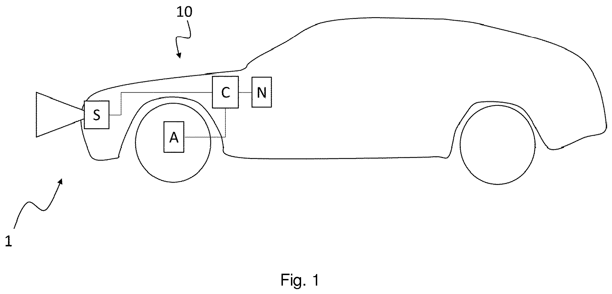

Fig. 1 zeigt zunächst ein Fahrzeug 1, aufweisend ein Fahrassistenzsystem 10 mit wenigstens einem Sensor S der Umfelddaten erfasst, vorzugsweise in Fahrrichtung vor dem Fahrzeug 1. In dem Fahrzeug ist weiter eine Steuereinheit C vorgesehen, die für die Verarbeitung und/oder Auswertung der Umfelddaten eingerichtet ist. Bei der Steuereinheit C kann es sich um eine im Wesentlichen bekannte Steuereinheit C handeln, die insbesondere Teil eines Fahrerassistenzsystems 10 sein kann. Die Steuereinheit C kann insbesondere Daten von einer Navigationseinheit N abrufen und ein Signal an einen Aktor des Fahrzeugs 10 ausgeben. Mittels des Signals kann vorzugsweise ein Fahrparameter des Fahrzeugs 1 verändert werden, insbesondere eine Geschwindigkeit, Beschleunigung, Verzögerung, Querbeschleunigung, Stellung des Fahrpedals, Betätigungsgeschwindigkeit des Fahrpedals, Stellung des Bremspedals, Lenkeinschlag und/oder eine Blinkerbetätigung. Beispielsweise kann es sich bei dem Aktor A um einen Bremsaktor handeln, der bei Aktivierung das Fahrzeug abbremst.

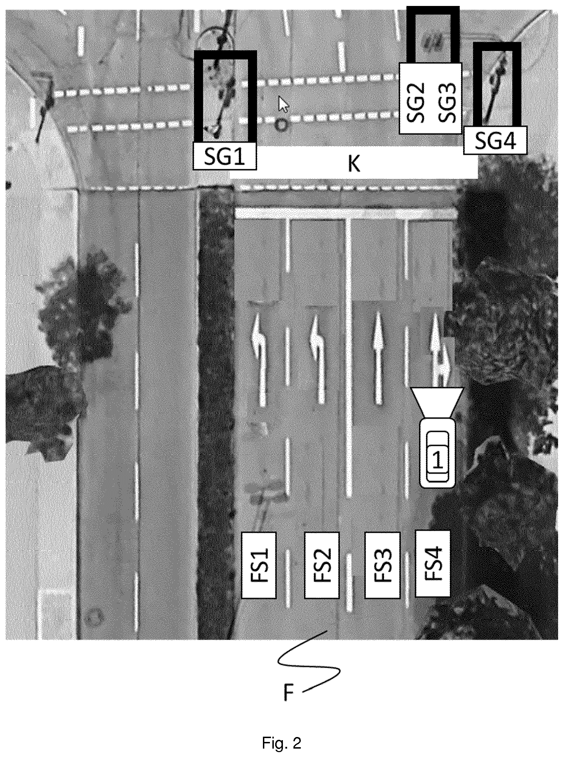

Wie in Fig. 2 illustriert ist, befindet sich das Fahrzeug 1 beispielsweise auf einer Fahrbahn F auf der Fahrt zu einer Kreuzung K. Die Fahrbahn F weist Fahrspuren FS1-FS4 auf, die jeweils zur Vorauswahl wenigstens einer Ausfahrt der Kreuzung vorgesehen sind. Das Fahrzeug befindet sich in dem Beispiel auf der Fahrspur FS4. Folglich ist zu bestimmen, welcher der Signalgeber SG1-SG4 einer Signalanlage für die Fahrrichtung auf der Fahrspur FS4 und/oder für die Fahrrichtung gemäß einer Routeninformation vorgesehen ist. Beispielsweise ist zu ermitteln, welcher der Signalgeber SG1-SG4 eine Geradeausfahrt über die Kreuzung K oder ein Rechtsabbiegen an der Kreuzung K regelt.

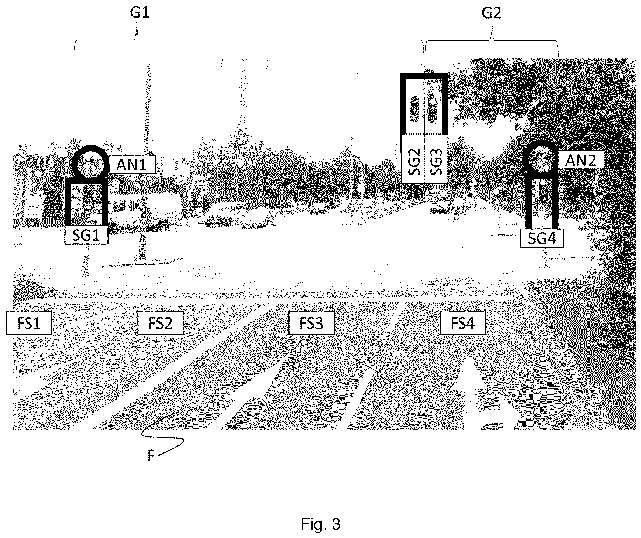

Der wenigstens eine Sensor S des Fahrzeugs 1 erfasst nun Umfelddaten, die von der Steuereinheit C in Form von Bilddaten ausgewertet werden können. Die Bilddaten können z.B. ein Bild ergeben, wie es in Fig. 3 dargestellt ist. Zu erkennen ist hier, dass sich die Signalgeber SG2 und SG3 nicht eindeutig einer der Fahrspuren FS1-FS4 zuordnen lassen. Es bedarf also einer Assoziation der Signalgeber SG1-SG4 mit wenigstens einer Fahrrichtung einer mehrere Fahrspuren FS1-FS4 aufweisenden Fahrbahn F.

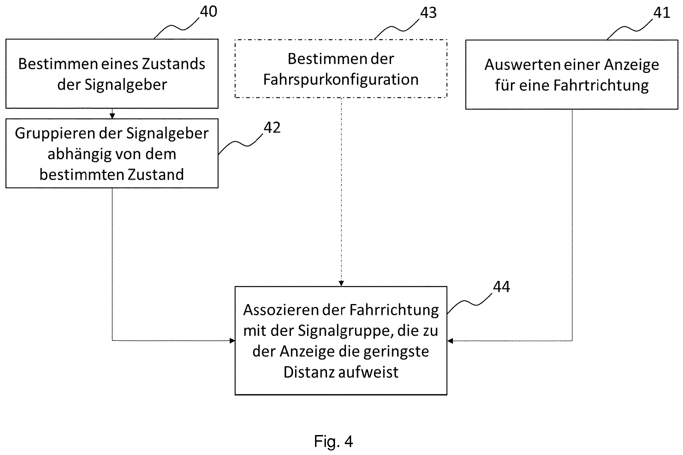

Um dies zu erreichen, bestimmt die Steuereinheit C wie in Fig. 4 mit Blick auf Fig. 3 veranschaulicht, in einem ersten Schritt 40 aus den Umfelddaten den Zustand der Signalgeber SG1-SG4. Um eine Zuordnung der Signalgeber SG1-SG4 zu den Fahrrichtung zu erreichen wertet die Steuereinheit C Anzeigen AN1, AN2, insbesondere Schilder, die eine zulässige Fahrrichtung anzeigen aus. Die Steuereinheit C bestimmt also in einem Schritt 41 einen Zustand der Anzeigen AN1, AN2 die zulässige Fahrrichtung betreffen. Die Anzeigen AN1, AN2 können auch elektronische Anzeigen sein, die wenigstens eine vorgeschriebene Fahrrichtung anzeigen. Die Steuereinheit C kann die von den Anzeigen AN1, AN2 angezeigten oder auf ihnen dargestellten Symbole, z.B. Richtungspfeile, auswerten. Es ist jedoch auch möglich, dass eine textuelle Information von den Anzeigen AN1, AN2 erkannt und ausgewertet wird. Länderspezifisch können zulässige Fahrrichtung auch durch Texte angegeben werden. Diese können mittels einer Texterkennung (OCR, Optical Character Recognition) durch die Steuereinheit C ausgewertet werden. Die Steuereinheit C gruppiert die Signalgeber abhängig von dem erkannten Status in Signalgruppen, Schritt 42. Beispielsweise Gruppiert die Steuereinheit C die Signalgeber SG1 und SG2 in eine erste Signalgruppe G1 (gleicher Zustand, beide zeigen "Grün"), die Signalgeber SG3 und SG4 aber in eine zweite Signalgruppe G2 (gleicher Zustand, beide zeigen "Rot").

Die Steuereinheit C bestimmt weiter in Schritt 43 eine Fahrspurkonfiguration der Fahrbahn F. Die Fahrbahnkonfiguration kann z.B. durch einer Abfrage von Geo-Informationen aus Navigationsdaten des Fahrzeugs oder durch Abfrage an einem entfernten Rechnersystem bestimmt werden. Der Schritt 43 ist optional.

Die Steuereinheit assoziiert nun jede Signalgruppe G1, G2 mit der Anzeige AN1, AN2, die die geringste Distanz zu der jeweiligen Gruppe hat. Im Beispiel aus Fig. 3 wird also die Anzeige AN1 der Signalgruppe G1 zugeordnet, während die Signalgruppe G2 mit der Anzeige AN2 assoziiert wird. Dabei wird ermittelt, welcher Signalgeber jeweils von einer Anzeige die geringste Distanz hat. Dieser wird mit der Signalgruppe G1, G2, in die der Signalgeber mit der geringste Distanz gruppiert ist, mit der Anzeige assoziiert.

Nach Auswertung der Anzeigen AN1, AN2 betreffend zulässige Fahrrichtungen wird in Schritt 44 eine Assoziation oder Zuordnung zwischen den Fahrrichtungen und den Signalgebern SG1-SG4 hergestellt. Somit ist klar, welche Signalgeber SG1-SG4 für welche Fahrrichtungen zuständig sind: Signalgruppe G1 für ein Linksabbiegen und Signalgruppe G2 für die Geradeausfahrt und das Rechtsabbiegen. Da das Fahrzeug 1 zudem Informationen über die gewählte Fahrspur haben kann, kann auch bestimmt werden, welcher Signalgeber der Signalgeber SG1-SG4 bzw. welche Signalgruppe G1, G2 für das Fahrzeug relevant ist.

Die Schritte 40 bis 43 können auch in anderer Reihenfolge, parallel oder verschränkt ausgeführt werden. Indessen muss Schritt 40 vor Schritt 42 ausgeführt werden.

Die Steuereinheit C kann also z.B. die Signalgruppe G2, die zu der wenigstens einen Anzeige AN2 die geringste Distanz hat, die Fahrrichtungen zuweisen, die auf der Anzeige AN2 dargestellt sind. Ebenso kann wenigstens einer zweiten Fahrspur FS1, FS2 für eine zweite Fahrrichtung wenigstens eine zweite Signalgruppe G1 zugeordnet werden.

Es wird also zunächst mittels wenigstens eines optischen Sensors S des Fahrzeugs 1 erkannt, welche Signalgeber SG1-SG4 einer Signalanlage in einer Phase geschaltet sind. Hierdurch können insbesondere zusammengehörende Signalgeber SG1-SG4 und somit verschiedene Signalgruppen G1, G2 identifiziert werden. Besonders werden in den Bilddaten aus den Umfelddaten erkannte Signalgeber SG1-SG4 zusammengefasst, wenn diese in gleicher Phase geschaltet sind, d.h. wenn die Signalgeber SG1-SG4 die gleiche Signalfarbe abgeben oder gleiche optische Elemente der Signalgeber SG1-SG4 aktiv sind (Auswertung der Position der optischen Elemente eines Signalgebers).

Für gewöhnlich hängen die Anzeigen AN1, AN2 bzw. sind die Schilder in unmittelbarer Nähe zu den Signalgruppen G1, G2 angeordnet, die den Verkehr für die entsprechend angezeigten Fahrrichtungen bzw. Kreuzungsausfahrrichtungen regeln.

Es ist nunmehr möglich, dass Ampelphasen über die Signalgruppen G1, G2 voneinander getrennt in eine Beziehung zu den Anzeigen AN1, AN2 gesetzt werden. Die Nähe der Anzeigen AN1, AN2 zu den Signalgruppen G1, G2 wird dahingehend ausgewertet, dass die Signalgruppen G1, G2, die am nächsten an den Anzeigen AN1, AN2 liegen, die Signalgruppen G1, G2 sind, die für die Regelung der entsprechenden Fahrrichtungen verantwortlich sind, die auf den Anzeigen AN1, A2 angezeigt werden.

Dabei kann auch vorgesehen sein, dass ein örtlicher und/oder zeitlicher Abstand bzw. für eine örtliche oder zeitliche Distanz eine Pufferung der erkannten Signalgeber SG1-SG4 und Anzeigen AN1, A2 erfolgt. Somit können auch verdeckte oder temporär verdeckte Anzeigen AN1, A2 bzw. Signalgruppen G1, G2 identifiziert und ausgewertet werden. Die Distanz kann also eine räumliche oder zeitliche Distanz sein.

Besonders wichtig ist hierbei die Auswertung der Richtung für die Geradeausfahrt. Insbesondere muss herausgefunden werden, welche Signalgruppe G1, G2 (im Beispiel die Signalgruppe G2) für die Regelung der Geradeausfahrt zuständig ist. Deshalb wird besonders auch die Anzeige AN2 ausgewertet, die sowohl bspw. eine Abbiegerichtung anzeigt als eben auch die Geradeausrichtung. Entsprechend wird die Signalgruppe G2, die sich in Nähe zu der Anzeige AN2 befindet sowohl für die entsprechende Abbiegerichtung als auch für die Geradeausfahrt ausgewertet.

Die frühe Erkennung der angezeigten Richtungen und der die Fahrt regelnden Signalgruppen G1, G2 wird insbesondere dafür ausgewertet, um ein komfortableres Fahrverhalten, insbesondere für ein autonomes Fahren, aber auch für Fahrerassistenten usw. zu ermöglichen. Es wird dann also festgestellt, ob ein Abbiegen bzw. eine Geradeausfahrt zulässig oder nicht zulässig ist.

Die Erfindung betrifft dabei insbesondere und vorzugsweise ein autonomes Fahrzeug, das selbstständig eine Fahrbahn bzw. ein Abbiegeverhalten und insbesondere die Ausfahrrichtung aus einer Kreuzung automatisiert wählt.

## Patentansprüche

1. Verfahren zur Zuordnung wenigstens eines Signalgebers (SG4) zu wenigstens einer Fahrrichtung, wobei
- Umfelddaten eines Fahrzeugs (1) mittels eines Sensors (S) erfasst werden, wobei die Umfelddaten den Zustand des Signalgebers (SG4) und wenigstens einer separaten Anzeige (AN2) betreffen und die Anzeige (AN2) wenigstens eine zulässige Fahrrichtung anzeigt und die Umfelddaten hinsichtlich der wenigstens einen zulässigen Fahrrichtung ausgewertet werden, und wobei
- der Signalgeber (SG4) mit der wenigstens einen zulässigen Fahrrichtung assoziiert wird, der die geringste Distanz zu der Anzeige (AN2) aufweist.

2. Verfahren nach Anspruch 1, wobei bei mehreren Signalgebern (SG1-SG4) die Umfelddaten hinsichtlich des Zustands der mehreren Signalgeber (SG1-SG4) ausgewertet werden und die Signalgeber (SG1-SG4) abhängig von dem Zustand in Signalgruppen (G1, G2) gruppiert werden, wobei eine Signalgruppe (G1/G2) der Signalgruppen (G1, G2) bei mehreren Anzeigen (AN1, AN2) jeweils mit der Anzeige (AN1/AN2) assoziiert wird, die den Signalgeber (SG1/SG2/SG3/SG4) mit der geringsten Distanz zu der jeweiligen Anzeige (AN1/AN2) aufweist, und wobei die Signalgruppe (G1/G2) mit der wenigstens einen zulässigen Fahrrichtung assoziiert wird, die durch die assoziierte Anzeige (AN1/AN2) angezeigt wird.

3. Verfahren nach Anspruch 1 oder 2, wobei die wenigstens eine Anzeige (AN1, AN2) ein Verkehrsschild oder eine elektronische Anzeigeeinheit ist, das/die wenigstens eine Fahrrichtung anzeigt.

4. Verfahren nach einem der vorgehenden Ansprüche, wobei die Signalgeber (SG1-SG4) einer Signalgruppe (G1, G2) in einer Phase geschaltet sind und insbesondere zu einem Zeitpunkt den gleichen Zustand anzeigen, insbesondere die gleichen Signalfarben.

5. Verfahren nach einem der vorgehenden Ansprüche, wobei eine Steuereinheit (C) dazu eingerichtet ist, abhängig von dem Zustand der Signalgeber (SG1-SG4), ein Signal auszugeben, vorzugsweise dann, wenn der Zustand der Signalgeber (SG1-SG4) keine Fahrerlaubnis in eine gewählte oder vorbestimmte Fahrrichtung signalisiert, wobei die gewählte oder vorbestimmte Fahrrichtung vorzugsweise auf Basis einer gewählten Fahrspur (FS1-FS4) und/oder einer Routeninformation bestimmt wird.

6. Verfahren nach einem der vorgehenden Ansprüche, wobei die Steuereinheit (C) durch Ausgabe des Signals einen Fahrparameter des Fahrzeugs (1) verändert, vorzugsweise durch Ansteuerung eines Aktors (A) und insbesondere eine Geschwindigkeit, Beschleunigung, Verzögerung, Querbeschleunigung, Stellung des Fahrpedals, Betätigungsgeschwindigkeit des Fahrpedals, Stellung des Bremspedals, Lenkeinschlag und/oder eine Blinkerbetätigung.

7. Verfahren nach einem der vorgehenden Ansprüche, wobei die Steuereinheit (C) dazu eingerichtet ist, ein Symbol auf der wenigstens einen Anzeige (AN1, AN2) für die wenigstens eine Fahrrichtung auszuwerten und insbesondre dahingehend, ob eine Geradeausfahrrichtung von dem Symbol umfasst ist.

8. Verfahren nach einem der vorgehenden Ansprüche, wobei der wenigstens eine Sensor (S) ein optischer Sensor ist, insbesondere eine Kamera, und wobei der Zustand der Signalgeber (SG1-SG4) durch eine Farbanalyse der Signalfarben und/oder durch eine Analyse der Position aktiver optischer Elemente der Signalgeber (SG1-SG4) erfolgt.

9. Verfahren nach einem der vorgehenden Ansprüche, wobei die Steuereinheit (C) die Routen- und/oder die Fahrspurkonfiguration aus einem Speicher des Fahrzeugs (1), insbesondere einem Navigationsdatenspeicher (N) oder mittels drahtloser Kommunikation von einem entfernten Rechnersystem abruft.

10. Fahrzeugassistenzsystem (10) zur Zuordnung wenigstens eines Signalgebers (SG4) zu wenigstens einer Fahrrichtung, wobei
- wenigstens ein Sensor (S) des Fahrzeugassistenzsystems (10) dazu eingerichtet ist, Umfelddaten des Fahrzeugs (1) zu erfassen, wobei die Umfelddaten den Zustand des Signalgebers (SG4) und wenigstens einer separaten Anzeige (AN2) betreffen und die Anzeige (AN2) wenigstens eine zulässige Fahrrichtung anzeigt, wobei
- das Fahrzeugassistenzsystem (10) eine Steuereinheit (C) aufweist, die dazu eingerichtet ist, die Umfelddaten hinsichtlich der wenigstens einen zulässigen Fahrrichtung auszuwerten und den Signalgeber (SG4) mit der wenigstens einen zulässigen Fahrrichtung zu assoziieren, der die geringste Distanz zu der Anzeige (AN2) aufweist.
